# EUROPEAN PATENT SPECIFICATION

(11) **EP 2 157 577 B1**
(45) Date of publication and mention of the grant of the patent: **15.08.2012**
(21) Application number: 09178572.5
(22) Date of filing: 30.05.2007
(51) Int. Cl.: G11B 7/24, G11B 7/246, G11B 23/36, G11B 7/007

(54) **Optical disc, information recording method and information reproducing method**
Optischer Datenträger, Informationsaufzeichnungsverfahren und Informationswiedergabeverfahren
Disque optique, procédé d'enregistrement d'informations et procédé de lecture d'informations

(30) Priority: 02.06.2006 JP 2006155109
(43) Date of publication of application: 24.02.2010
(62) Divisional of application: 07109205.0
(73) Proprietor: Kabushiki Kaisha Toshiba, Tokyo 105-8001 (JP)
(72) Inventor: Yoshida, Nobuhisa, Tokyo 105-8001 (JP); Ootera, Yasuaki, Tokyo 105-8001 (JP); Umezawa, Kazuyo, Tokyo 105-8001 (JP); Nakamura, Naomasa, Tokyo 105-8001 (JP); Takazawa, Koji, Tokyo 105-8001 (JP); Ando, Hideo, Tokyo 105-8001 (JP)
(74) Representative: Wenning, Ekkehard

(56) References cited:
- EP-A- 1 643 495
- EP-A- 1 662 496
- EP-A1- 1 930 887
- US-A1- 2006 104 194

## Description

The invention relates to a technique that allows to obtain a signal with a high CN ratio (Carrier to Noise Ratio) from a BCA (BURST CUTTING AREA) having information unique to a disc in a write-once optical disc which undergoes recording/reproducing (playback) upon irradiation of a laser beam.

Optical discs include read-only discs represented by CD and DVD-ROM, write-once discs represented by CD-R and DVD-R, rewritable discs represented by CD-RW and DVD-RW/RAM (such discs are used as an external memory of a computer or in a video recording/reproducing apparatus), and the like. In recent years, it is demanded to increase the capacities of optical discs to cope with an abrupt increase in recording capacity needed in information-related and broadcast-related apparatuses. To meet such demand, i.e., to increase the recording density, studies about a technique for attaining shorter laser wavelengths (for decreasing a focused beam spot size), an ultra-resolution technique, and so forth have been extensively made. Meanwhile, an improvement of the mastering technique has been examined to shorten the track pitch and mark pit pitch.

DVD discs, which are currently prevalent worldwide as recording and reproducing (playback) media, are fabricated as an optical disc having a total thickness of 1.2 mm by adhering, using an ultraviolet curing resin (to be referred to as UV resin hereinafter) or the like, 0.6-mm thick molded substrates which are fabricated by injection-molding a polycarbonate resin after a reflecting film and recording film are formed on these substrates. As the types of discs, various types of discs such as a read-only DVD-ROM, write-once DVD-R, rewritable DVD-RW/RAM, and the like are available.

As the next-generation DVD which has a larger recording capacity, HD_DVD discs have been standardized by the DVD forum and will be brought to the market soon. In HD_DVD, recording and reproducing are done using a (blue-violet or blue) semiconductor laser having a short wavelength of 405 nm in place of a (red) semiconductor laser of 650 nm used in DVD so as to increase the capacity. In this case, a mark shape recorded on a disc has a smaller size, thus attaining high-density recording. In order to stably reproduce (or play back) such high-density marks, a new signal processing method PRML (Partial Response Maximum Likelihood) has been developed.

A conventional signal detection method detects for each bit if recorded information is "0" or "1". Since neighboring pit or mark interval becomes smaller with increasing recording density of information, a reproduction (playback) signal is largely influenced by a waveform interference from neighboring information bits. In order to remove the influence of this waveform interference, signal processing which emphasizes high-frequency components of response characteristics of a recording/reproducing channel to suppress the bottom of a response waveform to neighboring bits is applied. However, when high-frequency components of the response characteristics are emphasized, since noise components are emphasized at the same time, errors due to such noise components also increase. Therefore, it is difficult for the conventional signal processing method to dramatically increase the recording density.

By contrast, with the PRML signal processing method, a waveform interference amount between neighboring bits of a reproduction (playback) signal waveform is permitted within a range specified by a PR (Partial Response) class. Since the reproduction waveform causes a distortion by the waveform interference from neighboring bits, data cannot be determined by only 1 bit unlike in the conventional method. However, since the waveform interference amount is limited to a prescribed value, signal power which is distributed before and after an information bit can be efficiently used using a maximum likelihood detector that adopts an ML (Maximum Likelihood) determination circuit which selects a maximum likelihood signal in a sequence that also considers signals before and after the waveform. For this reason, data can be detected at a satisfactory error rate. In this case, a PR equalizer is used as an equalization circuit that corrects a deviation of a reproduction waveform from the PR class.

A conventional level slice equalizer applies waveform equalization to a reproduction waveform so that the intersection between an equalization waveform and a certain threshold which is set in advance becomes the center of a window. More specifically, high-frequency components of a reproduction signal are amplified. A detector detects the intersection between the equalization waveform and threshold. When the intersection is detected within the window, the detector outputs binary data "1"; otherwise, it outputs "0". Then, the binary data after intersection detection undergoes NRZI (Non Return to Zero Inverted) conversion to obtain decoded data.

The intersection between the equalization waveform and threshold is not always the center of the window due to noise and the like. A standard deviation of intersection data upon being normalized by the window size is called jitter, which is used as evaluation criteria of optical discs and drives. Assume that an optical disc having a higher density than the existing DVD is to be reproduced (or played back) using the same optical head as the existing DVD. When the track density increases, a reproduction signal includes many signal deterioration components called crosstalk components. On the other hand, when the line density increases, the reproduction waveform becomes blunter. Since the equalizer amplifies the high-frequency components of a reproduction signal, as described above, when the input reproduction waveform becomes blunter, the high-frequency components are to be amplified more. As a result, the equalizer also amplifies the aforementioned signal deterioration components. In this way, when the waveform slice method is used as the signal detection method, signal deterioration components increase even when the density increases by any method, and data can no longer be correctly decoded.

In order to cope with such deterioration of the SNR (signal to noise ratio) of a reproduction signal, the PRML (Partial Response Maximum Likelihood) method is used as the reproduction signal processing method in place of the waveform slice method. In the PRML method, the equalizer equalizes to a waveform having known correlation between identification points called PR characteristics. With this PRML signal processing method, a satisfactory error rate can be obtained at the high recording density.

As HD_DVD discs developed using the aforementioned techniques and the like, various types of discs such as a read-only ROM disc, rewritable RW/RAM disc, and write-once R disc are available as in the DVD. Of these types of discs, R discs are used worldwide in large quantities as backup and storage media of data and video pictures even in the existing DVD. Especially for the write-once discs, users demand larger recording capacities, and single-sided, dual-layer reproduction discs are manufactured to increase the capacities (four-layer discs as a total of the numbers of layers on both sides can be manufactured by the same technique). The users strongly support single-sided, dual-layer discs compared to double-sided, dual-layer discs since they need not reverse them. Respective vendors tackle the development of single-sided, dual-layer (HD_DVD-R: DL) (DL is a short for Dual-Layer) discs in the HD_DVD. This dual-layer disc has a structure in which a first recording layer (L0 layer) is formed on the laser receiving surface side, and a second recording layer (L1 layer) is formed on the inner side (back side) of the disc with respect to the L0 layer.

As described above, higher-density discs from CD to DVD and further to HD_DVD have been developed. However, it is demanded for optical disc drives, players, and recorders to have reproduction (playback) compatibility of various types of discs, and disc discrimination becomes harder to attain. As one means for attaining disc discrimination, a method of assuring or forming a BCA that records information unique to a disc on each disc is known. The BCA is not indispensable to the existing DVD discs using a laser having a wavelength of 650 nm. However, for the next-generation HD_DVD discs using a laser of 600 nm or less (e.g., 405 nm), the BCA becomes more significant and an indispensable item for discs since it includes information associated with disc copy protection, and the like.

There are two BCA creation methods: stamper BCA that creates a BCA in a stamper upon mastering, and post-cut BCA which forms a BCA by a laser after preparation of a disc. The latter post-cut BCA itself is proposed by Jpn. Pat. Appln. KOKAI Publication No. 2004-152429 (Code recording method and code recording apparatus for optical disc). As the contents of this reference, a modulation signal is recorded in a barcode-like pattern (a mark pattern of a BCA code) in synchronism with a signal from a spindle motor on read-only and phase change recording optical discs. In this reference, the laser burns off a reflecting film on the read-only disc, or it changes the phase of the phase change recording optical disc, thus recording a BCA barcode pattern.

The existing DVD-R disc has a structure in which an organic dye is applied on a molded substrate, and a reflecting film is formed on the organic dye layer. Upon forming a BCA on this disc, post-cut BCA is normally used. Upon making an attempt to form a BCA by mastering BCA, since the dye fills in a BCA pattern on the molded substrate, a BCA signal with a high CN is hard to obtain. For this reason, a BCA is formed (post-cut) by recording it on the organic dye layer after preparation of the disc. In order to assign completely unique information to each disc, there is no alternative to post-cut BCA. As known arts associated with the organic dye, Jpn. Pat. Appln. KOKAI Publication No. 2002-74740 and Jpn. Pat. Appln. KOKAI Publication No. 2002-206061 are available.

On the existing DVD-R, dual-layer disc, a BCA is to be formed on the L1 layer as in the dual-layer DVD-ROM. However, it is difficult for both mastering BCA and post-cut BCA to "form a BCA on the L1 layer", and a BCA is formed on the L0 layer in the specification.

Since a write-once optical disc using an organic dye has dependence on wavelength in the recording characteristics, it is practically impossible to record a BCA barcode pattern on a disc using a next-generation short-wavelength compatible dye by the current long-wavelength laser which is used so far in post-cut.

In read-only, rewritable, and write-once optical discs, single-sided, dual-layer discs have been prepared to increase the information recording capacity. An HD_DVD dual-layer disc as the next-generation DVD is specified that a BCA having unique disc information is formed on a layer (Layer1: L1 layer) as the back side of the two layers. In an HD_DVD write-once disc (HD_DVD-R) as well, a BCA part from which a reproduction signal with a high CN ratio is to be formed on the L1 layer so as not to influence the front-side layer (Layer0: L0 layer). For this purpose, an optical disc in which the substrate structure and/or a recording dye used in the disc are improved, and a method and apparatus (disc drive) for recording and reproducing that optical disc are demanded.

EP 1930887 A1 which has been published on June 11, 2008, that is after the filing date of the present application, discloses a multi layer optical disk comprising a first recording layer and a second recording layer disposed at a larger distance from a light incident side as the first recording layer. The first recording layer and the second recording layer are capable of recording or reproducing by light with the predetermined wavelength. This optical disk comprises a substrate, and the second recording layer is provided on the substrate. An intermediate layer is provided on the second recording layer, and the first recording layer is provided on the intermediate layer. According to this state of the art a first dye material is used for the first recording layer and a second dye material is used for the second recording layer.

Furthermore, a groove is provided at an innerside of an substrate and a burst cutting area for recording a specific information is formed on the groove. Furthermore, EP 1662496 A discloses a disk drive comprising means for rotating a disk and means for irradiating the disk with the laser with a prescribed wavelength so as to reproduce information.

One of tasks of embodiments is to allow practical use of information recording on a BCA even using a long-wavelength laser on a write-once optical disc which uses a short-wavelength laser in information recording.

According to the present invention the above object is achieved by a multi-layered optical disk according to claim 1, by an information recording method according to claim 2, an information reproducing method according to claim 4 and a disk drive according to claim 5. The dependent claims are directed to advantageous aspects of the invention.

In an optical disc according to one embodiment, since a groove is cut in the BCA part on the molded substrate, and a dye is stored in this groove to raise the sensitivity of the dye in the BCA, even a laser which has a wavelength (600 nm to 800 nm) other than that (e.g., 405 nm) compatible to information recording of a dye can record a barcode pattern on the BCA.

On a dual-layer R disc according to one embodiment, a groove for the BCA is formed only on the L1 layer. When a BCA pattern is formed by mistake on the L0 layer, the BCA pattern read precision of the L1 layer impairs due to leakage of a signal from the BCA pattern formed by mistake on the L0 layer. For this reason, the process for forming a groove on the substrate is made only on a substrate for the L1 layer. A substrate of the L0 layer which need not undergo any BCA recording is not formed with any groove, and maintains a low recording sensitivity state of a dye of the L0 layer with respect to a long-wavelength laser. In this way, BCA recording can be made only on the L1 layer.

In the above description, the substrate structure (presence/absence of a groove) to which the dye is applied is improved. Alternatively, a component which can be recorded even by a long-wavelength laser may be mixed in the dye itself. That is, when a component which can be recorded by a long-wavelength laser is mixed in only the dye for the L1 layer which is to undergo BCA recording, but it is not mixed (included) in the dye for the L0 layer that need not undergo BCA recording, a BCA pattern can be stably formed on the L1 layer.

In a write-once optical disc for a short-wavelength (e.g., 405 nm) laser, BCA information can be post-cut by a laser of a relatively long wavelength (e.g., 600 nm to 800 nm).

The invention can be more fully understood from the following detailed description when taken in conjunction with the accompanying drawings, in which:
FIG. 1 is an exemplary view for explaining a bust cutting area (BCA) formed on an L1 layer of a write-once, single-sided, multi-layer (dual-layer) optical disc according to one embodiment of the invention;
FIGS. 2A and 2B are exemplary views for explaining the contents examples of a BCA record recorded in the BCA shown in FIG. 1;
FIG. 3 is an exemplary diagram for explaining an example of the arrangement of an apparatus for recording specific information including the BCA record shown in FIG. 2A in the BCA shown in FIG. 1;
FIG. 4 is an exemplary flowchart for explaining an example of the sequence for recording specific information (BCA record, etc.) on the LI layer of the write-once, single-sided, multi-layer (dual-layer) optical disc shown in FIG. 1;
FIG. 5 is an exemplary flowchart for explaining an example of the sequence for reproducing (or playing back) the specific information (BCA record, etc.) from the LI layer of the write-once, single-sided, multi-layer (dual-layer) optical disc shown in FIG. 1;
FIG. 6 is an exemplary view for explaining an example of the manufacturing processes of a write-once, single-sided, dual-layer optical disc according to one embodiment of the invention;
FIG. 7 is an exemplary graph for explaining that the light absorbance in the BCA can increase by forming a groove that stores a BCA recording dye in the BCA;
FIG. 8 is an exemplary view showing a practical example of a metal complex part of an organic material for the L0 layer;
FIGS. 9A, 9B, and 9C are exemplary views showing practical examples of dye parts of the organic material for the L0 layer;
FIG. 10 is an exemplary view showing a practical example of a part of the organic material for the L0 layer;
FIG. 11 is an exemplary view showing a practical example of another part of the organic material for the L0 layer;
FIG. 12 is an exemplary view showing a practical example of still another part of the organic material for the L0 layer;
FIG. 13 is an exemplary sectional view for explaining an example of the sectional structure of a write-once, single-sided, multi-layer (dual-layer) optical disc according to one embodiment of the invention; and
FIG. 14 is an exemplary block diagram for explaining an example of an apparatus for evaluating an optical disc according to one embodiment of the invention.

Various embodiments according to the invention will be described hereinafter with reference to the accompanying drawings.

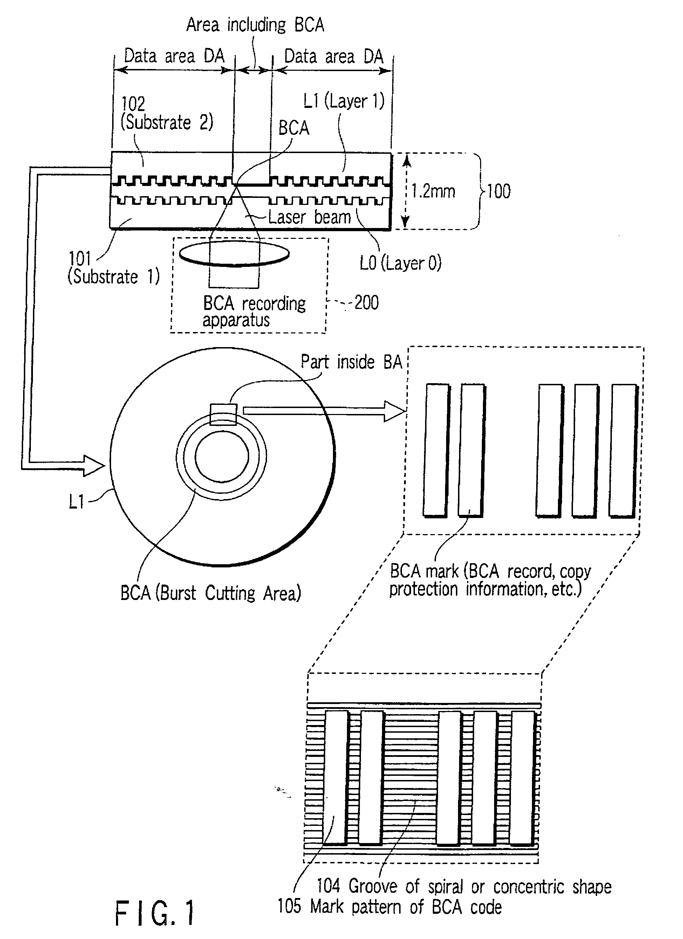

FIG. 1 is a view for explaining a burst cutting area (BCA) formed on an L1 layer of write-once, single-sided, multi-layer (dual-layer) optical disc 100 according to one embodiment (first embodiment). In FIG. 1, dual-layer adhered disc 100 having a substrate thickness of 1.2 mm is configured by forming an L0 layer on substrate 101 on the laser receiving surface side, forming an L1 layer to oppose the L0 layer, and placing substrate 102 on the L1 layer. A BCA (Burst Cutting Area) on which information unique to that disc is recorded as a barcode-like pattern (marks) is formed on the L1 layer on the inner periphery side of this disc 100. In the dual-layer disc, data area DA which records actual data is assured on the L0 layer and L1 layer within the range from a position outside area BA including this BCA to a position in front of the outer periphery of disc 100.

It is preferable for each individual optical disc 100 to record information unique to a disc in advance upon manufacturing the disc. The information unique to the disc recorded at that time is used when each individual disc is to be identified by, e.g., copy protection or the like. In optical discs such as CD, DVD, BD (Blue Disc), HD_DVD, and the like, such information (BCA record or the like) unique to a disc is cut in advance in the disc inner periphery portion (in area BA), as shown in FIG. 1, as a barcode-like pattern called BCA.

In order to form this BCA on disc 100, a method of cutting a BCA pattern on a stamper which serves as a mold upon molding an optical disc is available. However, in order to record individual unique information on each disc, a BCA pattern has to be cut using, e.g., a laser in a disc after manufacture. Normally, upon recording a BCA on a read-only disc, a pattern is formed by burning off an aluminum (A1) reflecting film by a laser beam. On the other hand, upon recording a BCA on a phase change recording disc, a pattern is formed by changing the phase of the recording layer to change its reflectance.

However, in case of write-once optical disc 100 using an organic dye material, a BCA pattern cannot be cut even when BCA recording apparatus 200 radiates a laser beam. As one reason, since the dye material has high dependence on wavelength, a pattern cannot be cut even by applying a BCA recording apparatus of the current wavelength (e.g., 650 nm) to an optical disc compatible to the next-generation short wavelength (e.g., 405 nm). Also, since the write-once disc uses a silver (Ag)-based material with good heat conduction, an apparatus like a BCA recording apparatus which has a low power density of a laser spot generates only an insufficient heat amount, and cannot record a pattern due to insufficient sensitivity. Furthermore, even when an apparatus with a high laser spot power is developed, since a very large laser power is put in for a film with insufficient sensitivity, a UV-curing resin used in adhesion may have changed or the reflecting film may get burned halfway.

To solve this problem, in the embodiment, upon recording BCA pattern (mark pattern of BCA code) 105 on write-once optical disc 100 using an organic dye material as recording layers, groove 104 having a spiral shape (or concentric shape with respect to the center of rotation of the disc) is formed in advance in BCA area (area including the BCA) on L1 molded substrate 102 on which the BCA is to be formed, as shown in FIG. 1. With this structure, groove 104 can store a dye used to record BCA information, and a laser emitted by BCA recording apparatus 200 makes the dye stored in that groove 104 cause a chemical change (or a microscopic physical structure change of the dye), thereby recording the pattern. In this way, since the structure having groove 104 used to store the dye is adopted, the sensitivity of the dye to the laser beam from BCA recording apparatus 200 can be raised practically. On the other hand, no groove 104 is formed on L0 substrate 101 which need not undergo BCA recording (first, it is not desired to undergo recording) to maintain a flat shape.

Note that BCA pattern 105 is a barcode-like pattern which normally has a width (tangential direction) of several ten µm, and a length (radial direction) of several hundred µm. Groove 104 of a spiral shape (or concentric shape) which is cut in advance on molded substrate 102 has a pitch of, e.g., several µm or less, and a depth which is nearly equal to that of the groove of a data area (less than 100 nm: e.g., about 50 nm to 80 nm).

In this embodiment, assume that disc 100 is a write-once optical disc which has a diameter of 120 mm and a thickness of 1.2 mm (by adhering two 0.6-mm thick polycarbonate molded substrates 101 and 102), and uses an organic dye material in recording layers. As for recording and reproducing beams, assume that an optical system having wavelength λ = 405 nm and numerical aperture NA = 0.65 is used. Also, assume that the inter-groove track pitch of a data recording area is 400 nm, and the BCA area is located to fall within the radial position range from 22.1 mm to 23.2 mm. However, upon practicing the invention, the invention is not limited to these numerical value examples. For example, an optical disc which has a 0.1-mm thick cover layer on its surface may be used, or an optical disc having a diameter of 80 mm may be used. Furthermore, a high-density track pitch pattern may be used, and a laser having still shorter wavelength (e.g., λ is 400 nm or less) may be used. Moreover, an optical system (objective lens) having still higher numerical aperture (e.g., NA is 0.8 to 0.9) may be used.

Practical material examples of disc 100 include: polycarbonate for molded substrates 101 and 102; nickel (Ni) for a stamper used in molding; an organic dye material including an azo-, diazo-, cyanine-, phthalocyanine-, or styryl-based dye, or their mixture for the recording film; silver (Ag), aluminum (Al), gold (Au), or a metal compound based on these metals for the reflecting film; and an acrylic or epoxy ultraviolet-curing resin or the like for an adhesive used to adhere the substrates. However, upon practicing the invention, the invention is not limited to these material examples.

In case of a read-only, dual-layer optical disc, it is a common practice to record a BCA on the back-side layer viewed from the incident surface of recording and reproducing beams. In order to maintain compatibility with the read-only disc, it is preferable to record a BCA signal on the back-side layer viewed from the incident surface of recording and reproducing beams also in a recordable (rewrite-once), dual-layer optical disc. However, some problems are posed to attain this.

That is, in case of a write-once optical disc using an organic dye material, since a dye is very sensitive to a wavelength, a BCA pattern cannot be satisfactorily recorded even when the existing BCA recording apparatus which uses a laser of a long wavelength (e.g., 650 nm to 780 nm) is applied to a next-generation optical disc (e.g., BD or HD_DVD) compatible to a short wavelength (e.g., 405 nm). In this case, the laser power of the BCA recording apparatus may be strengthened, or the laser wavelength of the BCA recording apparatus may be changed in correspondence with the data recording wavelength (e.g., 405 nm). However, since BCA information is recorded on the back layer (L1) through the front layer (L0), the dye of the front layer also reacts by this method in cooperation with a very deep focal depth of the BCA recording apparatus (or BCA recording light is parallel light). Then, this appears noise (inter-layer crosstalk signal) upon reproduction of a BCA signal.

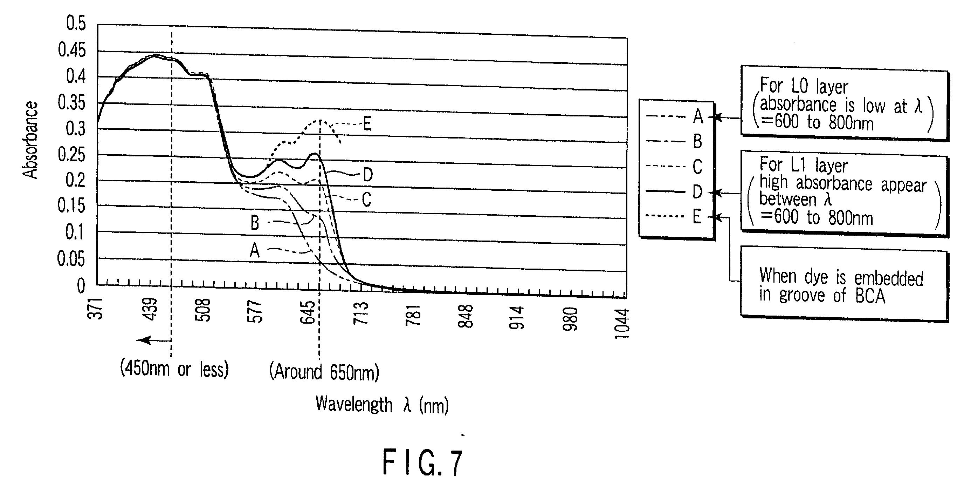

Hence, in another embodiment, if the wavelength used in recording and reproducing of data is represented by A (nm), and the wavelength of the BCA recording apparatus is represented by B (nm), an organic material to be used is selected so that the back layer (L1) on which the BCA is to be recorded (especially, BCA area BA having groove 104) has a higher recording sensitivity to wavelength B than the front layer (L0) (closer to the disc obverse face) on which no BCA is recorded. By using a dye compatible to the wavelength of the BCA recording apparatus in only the back layer (L1) while the wavelength used in recording of actual data (high-definition video data or the like encoded by MPG4AVC or the like) is set to be different from the wavelength used in recording of BCA information (A ≠ B) (for example, by mixing two different types of dyes having different sensitivities such as a dye having a sensitivity near 405 nm and that having a sensitivity near 650 to 780 nm), a BCA signal can be selectively recorded only on the back layer (L1). A practical example of absorbance characteristics of a dye suited to the back layer (L1) will be described later with reference to FIG. 7.

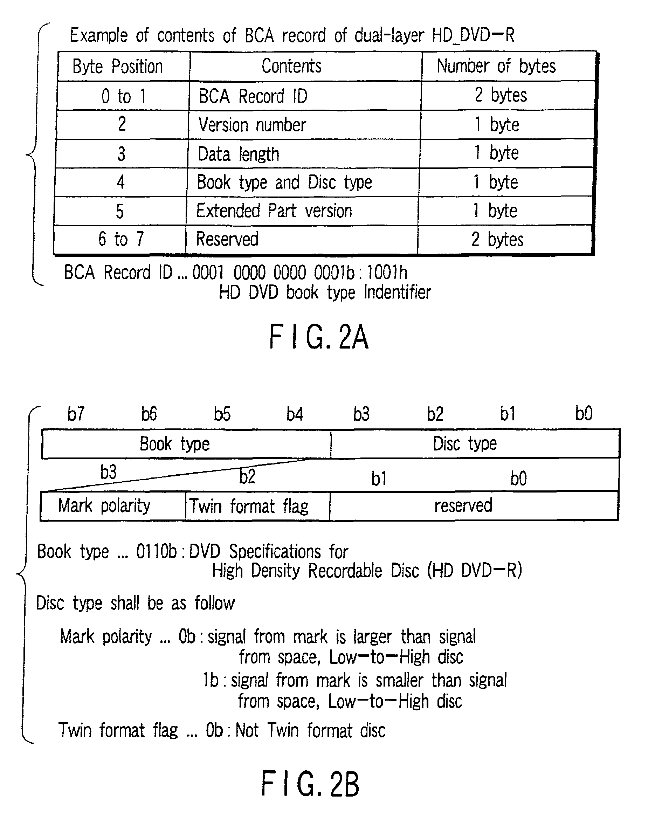

FIGS. 2A and 2B are views for explaining examples of the contents of the BCA record to be recorded in the BCA shown in FIG. 1. As exemplified in FIG. 2A, this record describes a BCA record ID (indicating the HD_DVD book type identifier) at relative byte positions 0 and 1, the version number of the applicable standard at relative byte position 2, a data length at relative byte position 3, a book type of the specification book and disc type at relative byte position 4, and the extended part version at relative byte position 5, and relative byte positions 6 and 7 are reserved to describe another information.

Of the BCA record, the field of the book type of the specification book and disc type to which that disc is compliant includes the contents shown in FIG. 2B. More specifically, the book type can describe information indicating the specifications for HD_DVD-R, and the disc type can describe a mark polarity flag and twin format flag.

The mark polarity flag in FIG. 2B indicates a "Low-to-High" disc in which a signal from a recording mark is larger than that from a space (between neighboring marks) when it is "0b". Also, this flag indicates a "High-to-Low" disc in which a signal from a recording mark is smaller than that from a space when it is "1b". The twin format flag indicates "not a twin format disc" when it is "0b", and a "twin format disc" when it is "1b". In case of the twin format disc, the disc (on which that BCA record is recorded) has two recording layers, and the respective layers have independent formats (e.g., the HD_DVD-Video format and HD_DVD-Video Recording format) specified by the DVD forum.

In the existing DVD, no twin format discs are available. However, since twin format discs are available in the next-generation HD_DVD, it is very significant for the write-once, multi-layer (dual-layer) optical disc (next-generation HD_DVD disc) according to one embodiment that the BCA is allowed to describe the twin format flag.

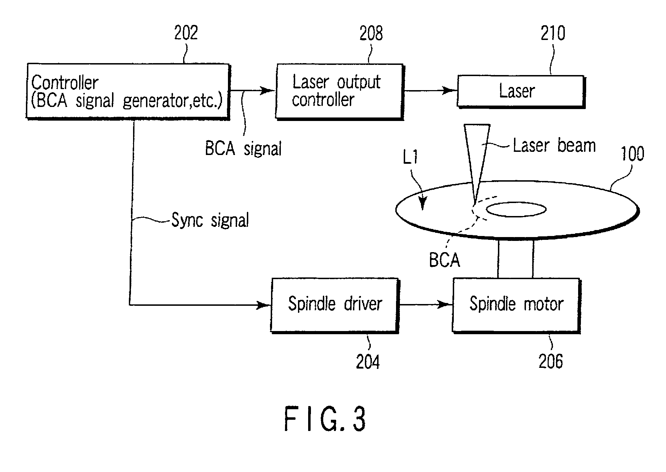

FIG. 3 is a block diagram for explaining an example of the arrangement of an apparatus for recording specific information including the BCA record in FIG. 2A and the like on the BCA in FIG. 1. The BCA recording apparatus records a BCA signal (a signal including information of the BCA record in FIG. 2A) on completed disc 100. Laser 210 is modulated in accordance with a BCA signal from controller 202, and a barcode-like BCA mark is recorded in synchronism with the rotation of disc 100. As the laser wavelength of the BCA recording apparatus, one wavelength within the range from 600 nm to 800 nm (generally, from 650 nm to 780 nm or from 680 nm to 780 nm) is adopted. In case of a dual-layer optical disc, the BCA recording location is normally in the vicinity of a radial position range from 22.2 mm to 23.1 mm on the inner periphery portion of the L1 layer. Upon making BCA recording, the L1 layer is irradiated with a laser through the L0 layer. In the embodiment, the absorbance (sensitivity) is adjusted within the wavelength range from 650 nm to 780 nm (or from 680 nm to 780 nm) is adjusted (sensitivity of the L1 layer > that of the L0 layer). For this reason, a BCA signal can be selectively and accurately recorded only on the L1 layer in a practical sense.

By adjusting the sensitivity (the absorbance at the use wavelength) of the dye of each layer, a BCA signal can be recorded on the next-generation optical disc while the laser wavelength and laser power of the BCA recording apparatus, which is normally used in the current DVD production line, remain the same. Since a BCA signal can be selectively recorded only on the L1 layer, there is no extra crosstalk noise from the L0 layer upon reproduction.

That is, in the embodiment, the sensitivity of the dye of each layer (L0, L1 or the like) is adjusted (using an organic material so that the sensitivity or absorbance of the dye of the L1 layer within the range from 600 nm to 800 nm, from 650 nm to 780 nm, or from 680 nm to 780 nm is larger than that of the dye of the L0 layer). In this manner, a BCA signal can be recorded on the next-generation optical disc (single-sided, dual-layer HD_DVD-R or the like) while the laser wavelength and laser power of the BCA recording apparatus, which is normally used in the current DVD production line, remain the same. Since a BCA signal can be selectively recorded only on the L1 layer, no extra crosstalk noise from the L0 layer is mixed upon reproduction.

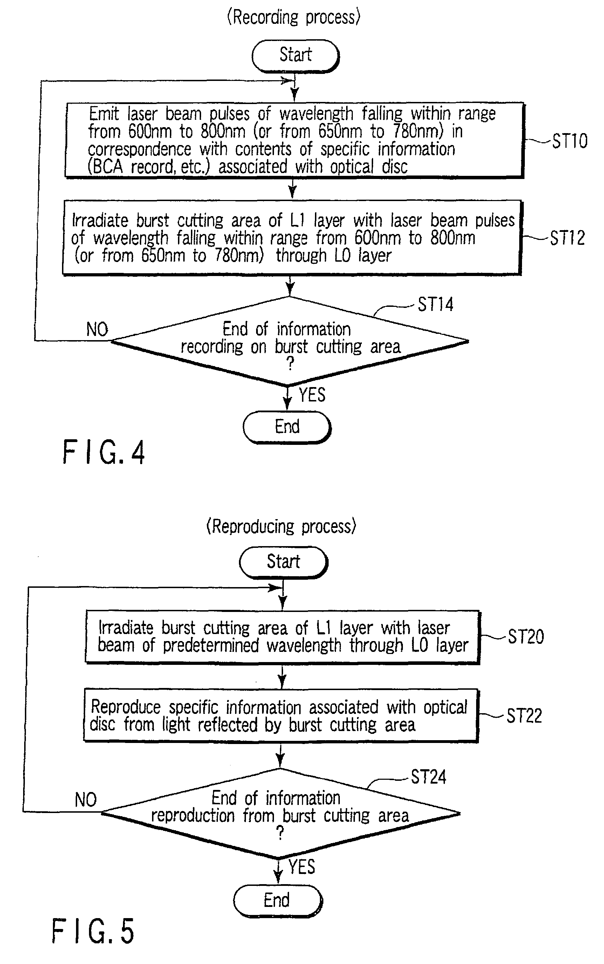

FIG. 4 is a flowchart for explaining an example of the sequence for recording (BCA post-cutting) specific information on the L1 layer of the write-once, single-sided, multi-layer (dual-layer) optical disc shown in FIG. 1. When controller 202 in FIG. 3 supplies a BCA signal including specific information such as the BCA record or the like in FIG. 2A to laser output controller 208, laser diode 210 emits laser beam pulses with one wavelength from the wavelength range from 600 nm to 800 nm (or from 650 nm to 780 nm or from 680 nm to 780 nm) in correspondence with the signal contents (block ST10). The BCA recording location of the L1 layer (the location where groove 104 in FIG. 1 is formed) is irradiated with the emitted laser beam pulses through the L0 layer of disc 100 shown in FIG. 1 (block ST12). This irradiation continues in synchronism with the rotation of disc 100. If no information to be recorded on the BCA remains (YES in block ST14), the BCA post-cutting to the L1 layer through the L0 layer ends.

FIG. 5 is a flowchart for explaining an example of the sequence for reproducing (or playing back) the specific information from the L1 layer of the write-once, single-sided, multi-layer (dual-layer) optical disc shown in FIG. 1. Upon reproducing the information recorded on the BCA, the BCA is irradiated with a laser beam having a predetermined wavelength (e.g., 405 nm or 650 nm) through the L0 layer (block ST20). From the reflected beam, the specific information (the BCA record and the like in FIG. 2A) associated with that optical disc is read (block ST22). This reading continues in synchronism with the rotation of disc 100. If no information to be read from the BCA remains (YES in block ST24), the BCA reproduction from the L1 layer through the L0 layer ends.

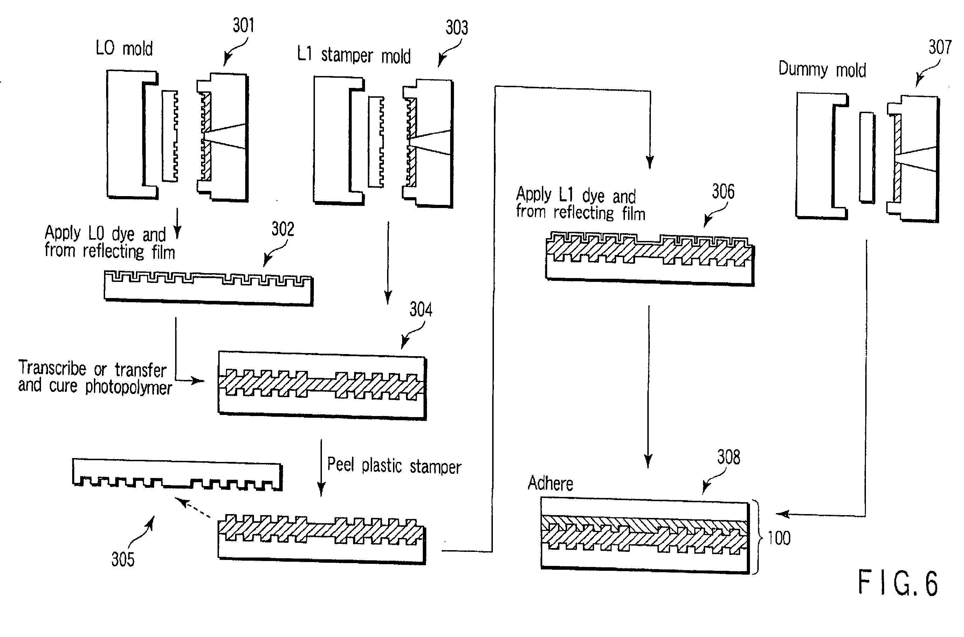

FIG. 6 is a view for explaining an example of the manufacturing processes of the write-once, single-sided, dual-layer optical disc according to one embodiment. The fabrication method of this write-once optical disc will be described below with reference to FIG. 6. The fabrication method of a single-layer disc will be roughly described first, and that of a dual-layer disc will be explained in detail. In case of a single-layer disc, glass whose surface is polished and washed is used as a master disc (not shown). A photoresist is applied onto the master disc surface, and the surface is exposed by a laser beam or the like to record predetermined information. Next, the exposed master disc is developed to form the concaves and convexes of pits and grooves. After that, a stamper (a material is generally nickel) is formed by applying plating to the master disc. A resin (a material is generally polycarbonate) molded substrate is prepared by injection molding using the stamper as a mold. In case of the single-layer disc, an organic dye is applied as a recording layer onto this molded substrate by spin-coating, and a reflecting layer (e.g., silver or a silver alloy) is formed on the recording layer. Another dummy molded substrate is prepared, and is adhered to the resultant structure via an adhesive layer, thus completing a disc.

The fabrication method of a dual-layer disc is, for example, as follows. That is, a molded substrate for the L0 layer is prepared by injection molding (block 0301), as shown in FIG. 6. A mold material is generally polycarbonate. A stamper used as a mold upon molding the L0 layer is prepared from a laser-exposed photoresist pattern by Ni plating. The dimensions of the molded substrate include a diameter of 120 mm, an inner diameter of 15 mm, and a thickness of 0.6 mm. An organic dye material which forms a recording layer is applied onto this molded substrate by known spin-coating, and a metal film (e.g., silver or a silver alloy) which serves as a reflecting film is formed by known sputtering or the like (block 0302). Note that this L0 layer is semitransparent to allow a laser beam to pass through it.

Parallel to the above processes, a plastic stamper used as a mold of the L1 layer is prepared by injection molding as in the above process (block 0303). A mold material is generally cycloolefinpolymer, but polycarbonate, acrylic, or the like may be used. An Ni stamper for the L1 layer is similarly prepared by plating a laser-exposed photoresist, but the concaves and convexes of the pattern are reversed to those of the L0 layer.

The L0 layer molded substrate formed with the recording layer and the plastic stamper are adhered to each other via a photopolymer, and are cured by irradiating the photopolymer with ultraviolet rays (block 0304). After that, the plastic stamper is peeled to expose the photopolymer layer on which the L1 pattern is transcribed or transferred (block 0305). An organic dye material which forms a recording layer is applied onto the photopolymer of the L1 layer by spin-coating, and a metal film (e.g., silver or a silver alloy) which serves as a reflecting film is formed on the recording layer by, e.g., sputtering (block 0306).

Parallel to the above processes, a dummy substrate (the material is polycarbonate or the like) is prepared by injection molding (block 0307). The dummy substrate is adhered to the resultant structure by an ultraviolet-curing adhesive, thus completing a dual-layer, write-once optical disc (block 0308). Note that a surface coating for user's printing by an ink-jet printer or the like may be formed on the dummy substrate, or a pattern such as the brand name, product name, and the like of the disc manufacturer (or vendor) may be added (although not shown).

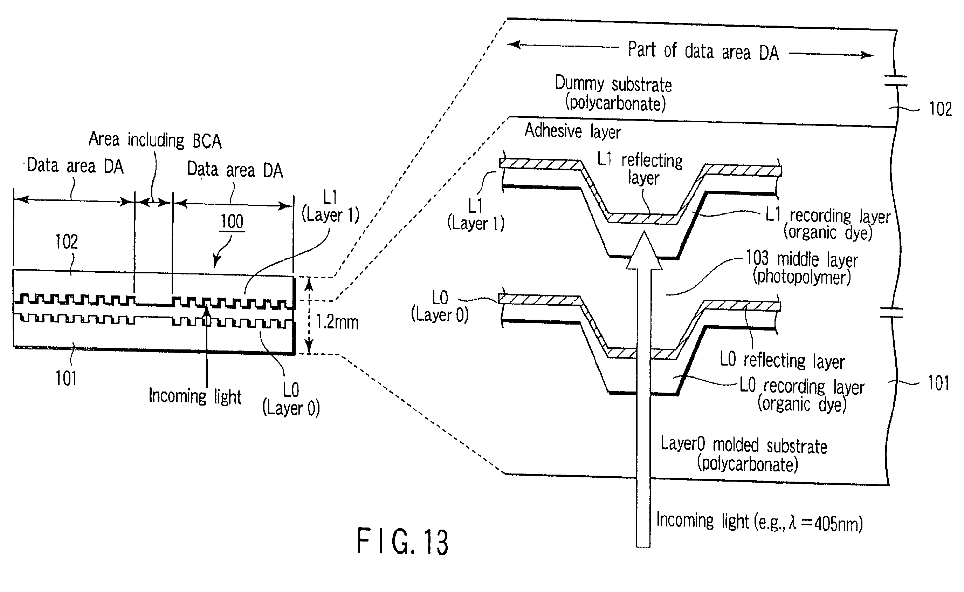

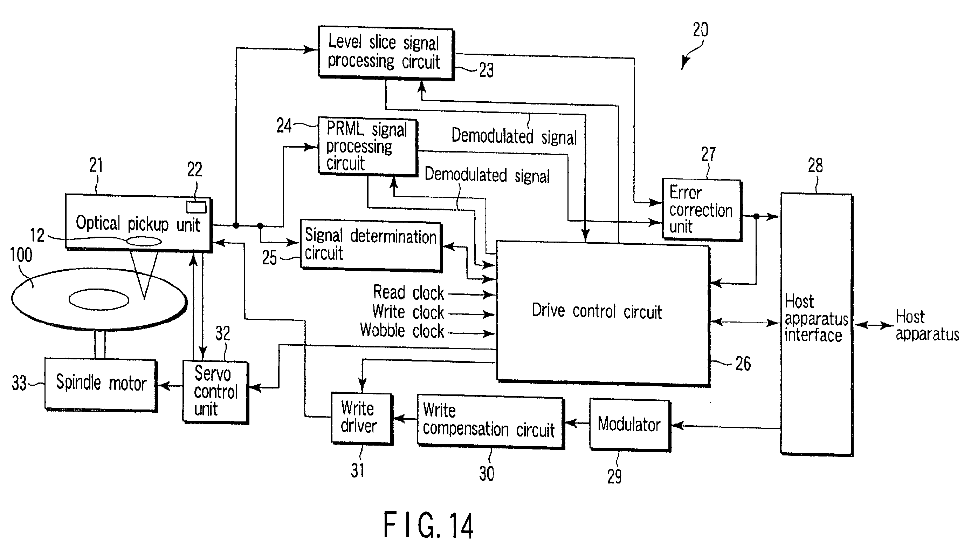

The dual-layer disc may also be fabricated by the following method (see FIGS. 6 and 13). More specifically, in case of the dual-layer disc, the same processes as in the single-layer disc are made until L0 and L1 stampers are prepared, and L0 and L1 molded substrates are formed by injection molding. After that, an organic dye for L0 is applied onto the L0 substrate by spin-coating to form a semitransparent, thin reflecting film (see block 0302 in FIG. 6, and an L0 recording layer and L0 reflecting film in FIG. 13). A photopolymer (see middle layer 103 in FIG. 13) is applied onto the reflecting film, and is adhered to the L1 substrate which is prepared separately (see an adhesive layer in FIG. 13). The photopolymer is cured by irradiating it with ultraviolet rays (block 0304 in FIG. 6). Subsequently, a peeling device peels only the L1 substrate to transcribe or transfer the pattern of the L1 substrate (block 0305 in FIG. 6). An organic dye for L1 is applied onto the resultant structure by spin-coating to form a reflecting film (see block 0306 in FIG. 6, and an L1 recording layer and L1 reflecting film in FIG. 13). Finally, a dummy substrate which is prepared separately is adhered to the resultant structure (block 0308 in FIG. 6) to obtain a write-once, single-sided, dual-layer optical disc (dual-layer R disc). The BCA recording apparatus (FIG. 3 or 14) records a barcode-like BCA pattern (pattern 105 in FIG. 1) unique to the disc on this adhered disc, thus completing a dual-layer, write-once optical disc.

In the write-once optical disc according to the embodiment, groove 104 is exposed on the BCA within the radial position range from 22.1 to 23.2 mm only on an L1 master disc in, e.g., the master disc exposure process. As a result, groove 104 is cut in the molded substrate obtained in the molding step, and a dye can be stored in that groove in the dye application process (a part of the process of block 0306 in FIG. 6), thus increasing the practical sensitivity of the dye in the final BCA recording (post-cut) process.

In the optical disc according to the embodiment, if the dimensions of groove 104 which is formed in advance on the BCA area of the L1-side molded substrate are quite different from those of the groove of a data area, the grooves of both the data area and BCA area cannot be formed in the same master disc exposure process of an identical exposing machine, and it is not preferable in terms of the disc manufacture. Hence, the track pitch of the BCA area is set to be nearly equal to that (e.g., 400 nm) of the data area. However, if these track pitches are exactly the same, an optical drive may not read a BCA signal due to disturbance by a track cross signal upon reproducing the BCA signal. In this case, the track pitch of groove 104 of the BCA area is set to be slightly smaller than that of the data area, thus setting dimensions that make a head of the optical drive harder to read that track cross signal. Furthermore, in order to prevent the track cross signal from disturbing reading of the BCA signal, the width of groove 104 of the BCA area is set to be broader than the half of the track pitch, so as to efficiently store the dye in groove 104 and to make the track cross signal harder to generate.

Suitable dimensions of groove 104 described above are as follows. That is, it is preferable to set the track pitch of groove 104 of the BCA area to be 1.05 times to 0.05 times that (e.g., 400 nm) of the data area, and to set the width of groove 104 of the BCA area to be 0.6 times to 0.8 times the track pitch (e.g., 200 nm to 420 nm) of the BCA area.

FIG. 7 is a graph for explaining that a BCA dye material of the L1 layer can be obtained by mixing a dye material for CD-R/DVD-R in that for the L0 layer in proper quantities, and the absorbance increases by forming groove 104 on the BCA and storing (embedding) the dye material there.

FIG. 7 shows, for example, graphs of the absorbance characteristics of a dye suited to the back layer (L1) on which BCA information is to be recorded. A dye exemplified in FIG. 7 naturally has a sensitivity around 405 nm since it is that for the next-generation optical disc (HD_DVD or the like) that records and reproduces (or plays back) data at a wavelength of 405 nm. In addition, as shown in graphs D and E in FIG. 7, the dye for the back layer (L1) slightly has a recording sensitivity within the range from 680 nm to 780 nm (or from 650 nm to 780 nm or from 600 nm to 800 nm) as the laser wavelength of a general BCA recording apparatus. If an organic dye material having a sensitivity at the laser wavelength used is used in the BCA, BCA information can be normally recorded on the back layer (L1) through the front layer (L0). On the other hand, the recording sensitivity of the dye for the front layer (L0) relatively drops within the range from 680 nm to 780 nm (or from 650 nm to 780 nm or from 600 nm to 800 nm), as in graph A in FIG. 7. In this way, the BCA can be selectively recorded only on the back layer (L1).

### <Dye material for L1 layer having sensitivity within range from 600 nm to 800 nm for BCA recording>

Since the write-once, multi-layer optical disc according to the embodiment is a disc that records and reproduces data at a wavelength of 405 nm, both the L0 and L1 layers use an organic dye material having a light absorption at the wavelength of 405 nm. Furthermore, the dye for the L1 layer also has a light absorption within the range from 600 nm to 800 nm so as to attain BCA recording using a laser beam within the range from 600 nm to 800 nm. For example, a mixture (graph D) prepared by mixing a dye having a light absorption within the range from 600 nm to 800 nm in an L1 dye (having a small or almost no light absorption within the range from 600 nm to 800 nm; graph A) is used as a dye for the L1 layer.

Such dye mixture (graph D) may be used at only the BCA recording location of the L1 layer. However, in order to simplify the manufacturing processes (and to reduce the unit price of discs to be mass-produced), the dye mixture (graph D) may be used for the entire L1 layer. When the dye mixture (graph D) is used for the entire L1 layer, not only the BCA recording and reproducing of the L1 layer can be done through the L0 layer, but also the data area of the L1 layer becomes compatible to both the high-density recording by a blue laser and (relative) low-density recording by a red laser.

Furthermore, when the dye mixture (graph D) for the L1 layer is designed to be stored in groove 104 in FIG. 1, the BCA recording sensitivity (absorbance) at the BCA recording wavelength can further increase, as shown in graph E in FIG. 7 (in other words, by forming groove 104, the dye volume that absorbs the energy of a laser at the BCA recording wavelength of only the BCA area increases).

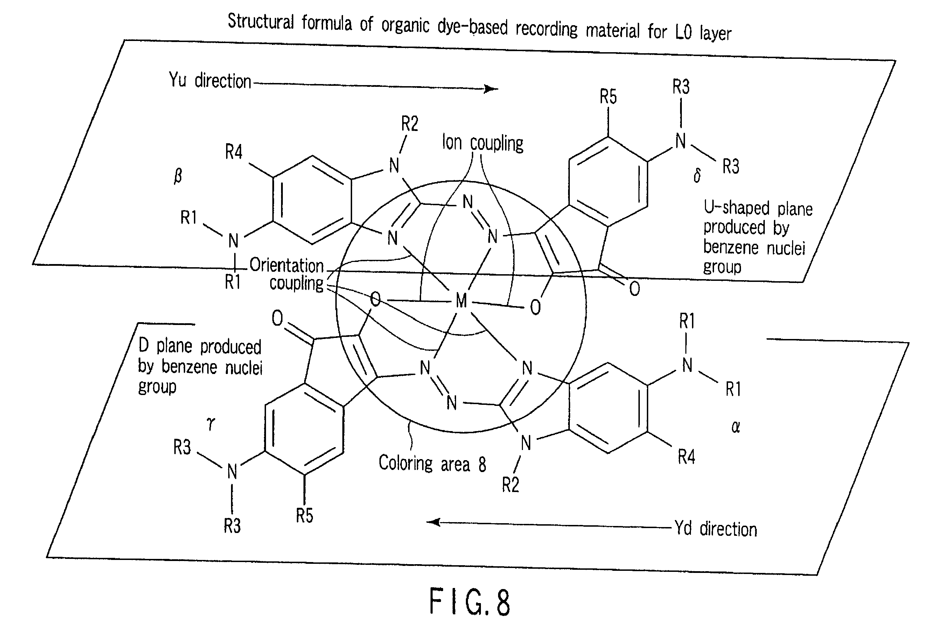

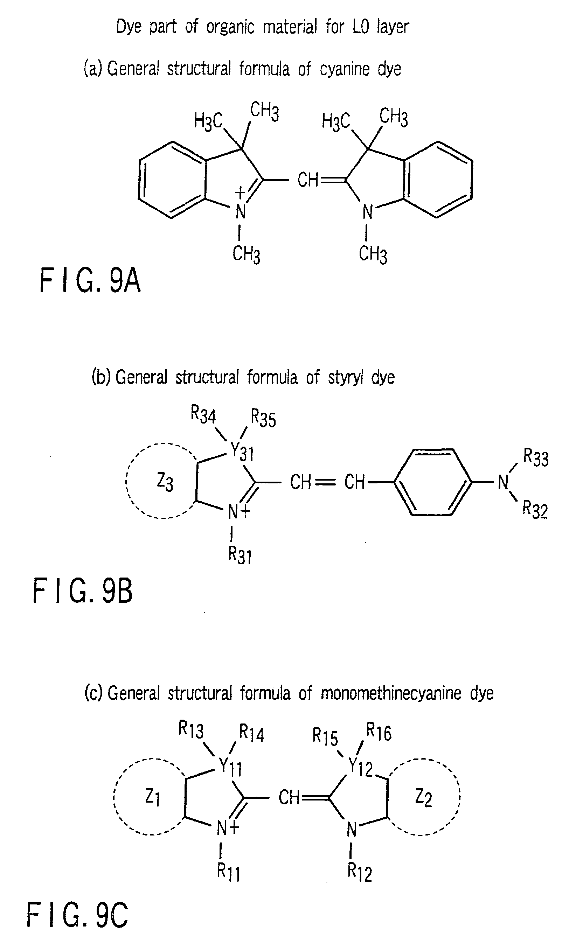

FIG. 8 shows a practical example of a metal complex part of the organic material for the L0 layer, and FIGS. 9A to 9C show practical examples of dye parts of the organic material for the L0 layer. A circular surrounding area having central metal M of the azo metal complex shown in FIG. 8 as the center corresponds to coloring area 8. When a laser beam passes through this coloring area 8, localized electrons within this coloring area 8 resonate with a change in magnetic field of the laser beam, and absorb energy of the laser beam. A value obtained by converting the frequency of the change in magnetic field at which the localized electrons resonate most and easily absorb the energy into the wavelength of the laser beam is represented by maximum absorbance wavelength λmax. Maximum absorbance wavelength λmax shifts toward the longer wavelength side with increasing length of coloring area 8 (resonance range) shown in FIG. 8. By substituting atoms of central metal M in FIG. 8, the localized range of localized electrons near central metal M (how central metal M can attract the localized electrons to the vicinity of the center) changes, and the value of maximum absorbance wavelength λmax changes. For example, by selecting a material having λmax near 405 nm, an organic material which has sensitivity (absorbance) at a wavelength of 405 nm can be obtained.

As a dye material for the L0 layer having a light absorption at the wavelength of 405 nm, an organic dye material having a structure obtained by combining the organic metal complex part having a general structural formula shown in FIG. 8 and the dye material part shown in FIGS. 9A to 9C can be used. Central metal M of the organic metal complex can use cobalt or nickel (in addition, scandium, yttrium, titanium, zirconium, hafnium, vanadium, niobium, tantalum, chromium, molybdenum, tungsten, manganese, technetium, rhenium, iron, ruthenium, osmium, rhodium, iridium, palladium, platinum, copper, silver, gold, zinc, cadmium, mercury, and the like). As the dye material part, a cyanine dye, styryl dye, and monomethinecyanine dye, whose general structural formulas are shown in FIGS. 9A to 9C can be used.

Furthermore, as a dye material for the L1 layer having a light absorption not only at the wavelength of 405 nm (450 nm or less) but also within the range from 600 nm to 800 nm (or from 650 nm to 780 nm or from 680 nm to 780 nm), the following materials can be used. That is, a dye for CD-R or DVD-R which has a light absorption within the range from 600 nm to 800 nm (or from 650 nm to 780 nm or from 680 nm to 780 nm) is mixed to have the aforementioned dye material for the L0 layer as a base. As a result, the dye mixture can have a light absorption within the range from 600 nm to 800 nm (or from 650 nm to 780 nm or from 680 nm to 780 nm) used in BCA recording in addition to that at the wavelength of 405 nm for data recording. As the dye for CD-R or DVD-R to be mixed for this purpose, known organic dye materials such as an azo dye, cyanine dye, phthalocyanine dye, and the like are available. As the mixing amount of that dye, for example, about 10 wt.% are practical.

### (Example 2)

In the disc of Example 1 described with reference to FIG. 1 and the like, the dye thickness is earned by the effect of groove 104 which is formed in advance (in other words, the volume of the dye which absorbs the energy of a laser in unit time increases), thus increasing the recording sensitivity upon BCA formation. However, in addition, adjusting an organic dye component used in the layer on which the BCA is to be formed is also an effective method in terms of improvement of the recording sensitivity upon BCA formation. That is, for example, in a dual-layer HD_DVD-R disc, since the BCA is formed only on the L1 layer, the organic dye of the L1 layer is adjusted.

A pre-production disc of Example 2 is prepared under the following conditions. After an L0 layer using a recordable organic dye which had an absorption near 405 nm is formed, an L1 substrate pattern is transcribed or transferred on the L0 layer using a photopolymer, and an L1 organic dye is further applied by spin-coating.

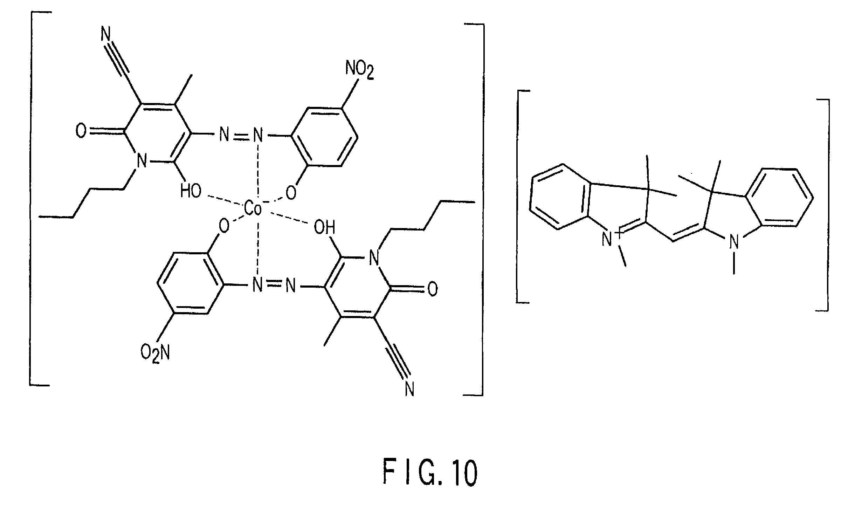

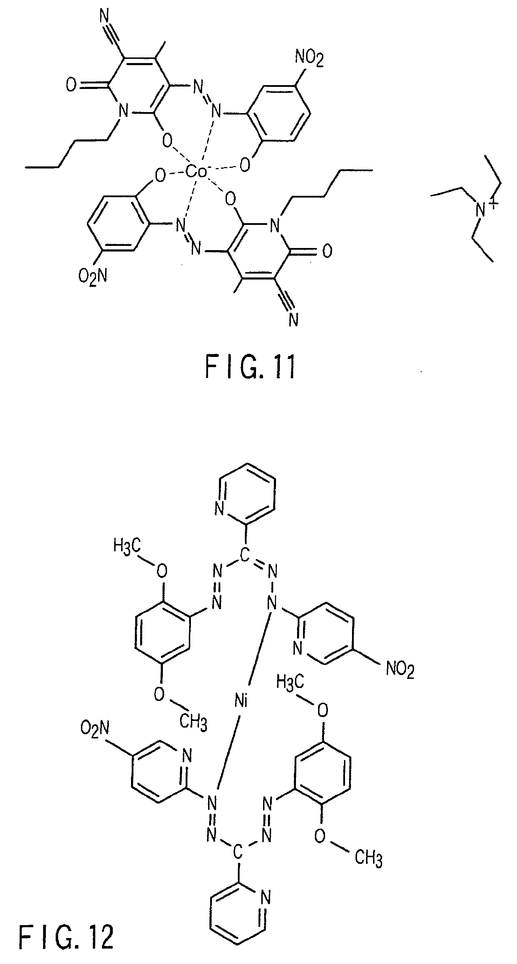

The applied organic dye (A) is obtained by mixing respective structures at a ratio of 28 wt.% of an organic material shown in FIG. 10 + 57 wt.% of an organic material shown in FIG. 11 and 15 wt.% of an organic material shown in FIG. 12. An Ag-alloy reflecting film is laminated by sputtering on the substrate applied with this dye mixture, so as to have a thickness of 100 nm, and the resultant structure is adhered to a 0.6-mm thick transparent resin substrate (polycarbonate) using a UV-curing resin.

### (Example 3)

The write-once, dual-layer discs pre-produced by the methods of Examples 1 and 2 underwent BCA part signal evaluation. An evaluation apparatus is an optical disc evaluator having an optical head which has laser wavelength λ: 405 nm and numerical aperture NA: 0.65 of an objective lens of an optical pickup. The arrangement of the evaluation apparatus will be described below.

FIG. 14 is a schematic block diagram of an optical disc evaluation apparatus according to one embodiment. Optical disc apparatus 20 comprises optical pickup unit (optical head) 21, level slice signal processing circuit 23, PRML signal processing circuit 24, signal determination circuit 25, drive control circuit 26, error correction unit 27, host apparatus interface 28, modulator 29, write compensation circuit 30, write driver 31, servo control unit 32, spindle motor 33, and the like.

Optical pickup unit 21 has objective lens 12. Optical pickup unit 21 includes semiconductor laser unit 22 in correspondence with objective lens 12. This unit 22 is energized by write driver 31 as a laser control unit to generate a laser beam of a predetermined wavelength. Upon energizing semiconductor laser unit 22, objective lens 12 is directed toward optical disc 100, and the corresponding laser beam is converged on optical disc 100. With this converged laser beam, evaluation data is written in and reproduced (or played back) from optical disk 100. Upon BCA reproduction, a signal is detected from the BCA by moving optical head 21 to a predetermined radial position of disc 100 while applying only focusing servo.

When the aforementioned evaluation apparatus evaluated the write-once, dual-layer discs pre-produced by (Example 1) and (Example 2), it is confirmed that these discs cleared the BCA signal amplitude specification (IBLMax/IBHmin ≤ 0.80) and the pulse width specification (if the pulse width of low level is 1.56 ± 0.75 µs and n is an integer ranging from 1 to 4 at an intermediate level = (IBHmin + IBLmax)/2 of the BCA signal pulse amplitude, one cycle is defined by 4.63n ± 1.00 µs).

### [Other Application Examples]

Write-once optical discs include High-to-Low media in which the reflectance of a mark is lower than that of an unrecorded part upon recording, and Low-to-High media in which the reflectance of a mark is higher than that of an unrecorded part (for example, when a dye described in Jpn. Pat. Appln. KOKAI Publication No. 2002-74740 or Jpn. Pat. Appln. KOKAI Publication No. 2002-206061 is used). The embodiment can be applied to both the types of media. Furthermore, the embodiment can be applied to not only a case in which a barcode-like pattern is recorded on the BCA area, but also a BCA pattern in which "unrecorded" parts define a barcode shape like outline characters.

### <Summary>

(1) Write-once optical disc (100) according to the embodiment has one or more recording layers (L0, L1) on one or more molded substrates (101, 102). A burst cutting area (BCA) using an organic dye material is assured on one (L1) of these recording layers and is configured to record specific information (the BCA record in FIG. 2A, etc.) unique to the disc. By irradiating a data area (DA) of the recording layer (L0 or L1) with a laser beam whose wavelength is 600 nm or less (preferably, 450 nm or less; 405 nm as a practical example), recording and reproducing are done. On this optical disc, a groove (104 in FIG. 1) is formed on the molded substrate having the recording layer (L1) on which the burst cutting area (BCA) is assured, and stores the organic dye material, thereby increasing the sensitivity (graph E of absorbance in FIG. 7) of the burst cutting area to the wavelength (600 nm to 800 nm: 650 nm as a practical example) used to record the specific information (BCA record, etc.) unique to the disc relative to a case in which no groove is formed (e.g., graph D of absorbance in FIG. 7).
(2) The groove (104) is formed only on an area (BA in FIG. 13) including the burst cutting area of the one or more molded substrates.
(3) The shape of the groove (104) formed on the burst cutting area is defined so that its groove pitch is nearly equal to or smaller than the track pitch (400 nm) of the data area, and its groove width is larger than the half of the groove pitch.
(4) The shape of the groove (104) is defined so that its groove pitch falls within the range from 1.05 times to 0.50 times the track pitch of the data area, and its groove width falls within the range from 0.6 times to 0.8 times the groove pitch.
(5) A plurality of recording layers are formed, and the data area of the recording layer (L0) on the light-receiving surface side of the laser beam of the plurality of recording layers (L0, L1) uses a first organic dye material (FIG. 8, FIGS. 9A to 9C) having a sensitivity to light of a wavelength around 405 nm (±15 nm). The burst cutting area is formed on the recording layer (L1) on the back side of the light receiving surface of the laser beam of the plurality of recording layers (L0, L1). The organic dye material to be stored in the groove (104) of this burst cutting area uses a second organic dye material (FIGS. 10 to 12) having a sensitivity to light of a wavelength falling within the range from 600 nm to 800 nm.
(6) A plurality of recording layers are formed, and the entire recording layer (L1) on the back side of the light receiving surface of the laser beam of the plurality of recording layers (L0, L1) uses an organic dye material (FIGS. 10 to 12) which has sensitivities (graph D or E in FIG. 7) to both light of a wavelength around 405 nm (±15 nm) and light of a wavelength falling within the range from 600 nm to 800 nm.
(7) When the specific information is recorded on the burst cutting area as a combination of a BCA space equivalent to channel bit 0 and a BCA mark equivalent to channel bit 1, letting IBHmax and IBHmin be the maximum top level and minimum top level of the reproduction signal amplitude (both the amplitude value on the top level side and that on the bottom level side have variations due to the influence of noise and the like) corresponding to channel bit 0 and IBLmax be the maximum bottom level of the reproduction signal amplitude corresponding to channel bit 1, the shape of the groove and/or the organic dye material to be stored in the groove are/is selected so as to meet IBLmax/IBHmin ≤ 0.8.
(8) The shape of the groove and/or the organic dye material to be stored in the groove are/is selected so as to meet IBHmax/IBHmin (indicating level variations of the reproduction signal amplitude corresponding to channel bit 0) ≤ 1.4.
(9) A write-once, multi-layer (dual-layer) optical disc which performs recording and reproducing upon irradiation of a laser beam having a wavelength of 600 nm or less, comprises one or more molded substrates each having a groove formed in a concentric shape or spiral shape (and pits having information) used as a guide for reading out information, one of the one or more molded substrates has a burst cutting area on which specific information (BCA record, etc. in FIG. 2A) unique to the disc is recorded at a specific wavelength (one wavelength falling within the range from 600 nm to 800 nm: for example, 650 nm), and recording and reproducing of information are allowed by forming recording layers of an organic dye on the one or more molded substrates, wherein a groove (104) is formed on the burst cutting area to store the organic dye material, thereby increasing a sensitivity of this organic dye material to the specific wavelength (e.g., 650 nm).
(10) An information recording method according to the embodiment uses a write-once, multi-layer (dual-layer) optical disc that performs recording and reproducing upon irradiation of a laser beam having a wavelength of 600 nm or less, which comprises one or more molded substrates each having a groove formed in a concentric shape or spiral shape (and pits having information) used as a guide for reading out information, and in which one of the one or more molded substrates has a burst cutting area on which specific information (BCA record, etc. in FIG. 2A) unique to the disc is recorded at a specific wavelength (one wavelength falling within the range from 600 nm to 800 nm: for example, 650 nm), a groove (104) that stores an organic dye material is formed on this burst cutting area, and recording and reproducing of information are allowed by forming recording layers (L0, L1) of an organic dye on the one or more molded substrates. In this recording method, the burst cutting area on which the groove (104) is formed is irradiated with a laser of the specific wavelength (e.g., 650 nm), thereby recording the specific information.
(11) An information reproducing method according to the embodiment uses a write-once, multi-layer (dual-layer) optical disc that performs recording and reproducing upon irradiation of a laser beam having a wavelength of 600 nm or less, which comprises one or more molded substrates each having a groove formed in a concentric shape or spiral shape (and pits having information) used as a guide for reading out information, and in which one of the one or more molded substrates has a burst cutting area on which specific information (BCA record, etc. in FIG. 2A) unique to the disc is recorded at a specific wavelength (one wavelength falling within the range from 600 nm to 800 nm: for example, 650 nm), a groove (104) that stores an organic dye material is formed on this burst cutting area, and recording and reproducing of information are allowed by forming recording layers (L0, L1) of an organic dye on the one or more molded substrates. In this reproducing method, the burst cutting area on which the groove (104) is formed is irradiated with a laser of the specific wavelength (e.g., 405 nm), thereby reproducing (or playing back) the specific information.
(12) A disc drive according to the embodiment uses a write-once, multi-layer (dual-layer) optical disc that performs recording and reproducing upon irradiation of a laser beam having a wavelength of 600 nm or less, which comprises one or more molded substrates each having a groove formed in a concentric shape or spiral shape (and pits having information) used as a guide for reading out information, and in which one of the one or more molded substrates has a burst cutting area on which specific information (BCA record, etc. in FIG. 2A) unique to the disc is recorded at a specific wavelength (one wavelength falling within the range from 600 nm to 800 nm: for example, 650 nm), a groove (104) that stores an organic dye material is formed on this burst cutting area, and recording and reproducing of information are allowed by forming recording layers (L0, L1) of an organic dye on the one or more molded substrates. This disc drive comprises means (33) for rotating the optical disc (100); and means (22) for reading the specific information by irradiating the burst cutting area on which the groove (104) is formed with a laser of the specific wavelength (e.g., 405 nm: which need not always be the same as the BCA recording wavelength).

Note that the invention is not limited to the aforementioned embodiments, and various modifications may be made based on techniques available at that time without departing from the scope of the invention when it is practiced at present or in the future. For example, a recording layer which has a high sensitivity to a blue laser may be formed at a 0.1-mm depth position from the light receiving surface (disc surface), another recording layer which has a sensitivity to a blue laser may be formed near a 0.6-mm depth position from the light receiving surface, and a recording layer (which adopts an organic material having a high sensitivity to a blue laser in a data recording area) which has a BCA recording layer having a high sensitivity to a red laser may be formed under the other recording layer.

The respective embodiments may be combined as needed as much as possible, and combined effects can be obtained in such case. Furthermore, the embodiments include inventions of various stages, and various inventions can be extracted by appropriately combining a plurality of constituent elements disclosed in this application. For example, even when some constituent elements are omitted from all the constituent elements disclosed in the embodiments, an arrangement from which those constituent elements are omitted can be extracted as an invention.

## Claims

1. A multi-layered optical disc (100) having a bustantting area and comprising a first recording layer (L0) and a second recording layer (L1) disposed at a larger distance from a light incident side than the first recording layer (L0), the first recording layer (L0) and the second recording layer (L1) being capable of recording or reproducing data by light with a prescribed wavelength, wherein the optical disc comprises:
a substrate (102),
a second reflecting layer (L1) provided on the substrate (102),
the second recording layer (L1) being provided on the second reflecting layer_(L1),
an intermediate layer (103) provided on the second recording layer (L1), and
a first reflecting layer (L1) provided on the intermediate layer (103),
the first recording layer (L0) being provided on the first reflecting layer_(L1), and wherein
a first dye material is used for the first recording layer (L0),
and a second dye material is used for the second recording layer (L1), the second dye materials differs from the first dye material; wherein in
a groove (104) is provided at the second recording layer (L1) the burst cutting area (BCA) having a specific information (BCA) recorded so that the specific information can be recorded only on the second recording laver (L1).

2. An information recording method using the multi-layered optical disc of claim 1, the method comprising:
irradiating a laser with a given wavelength on one of the first and second recording layers (L0, L1); and
recording information on the one recording layer.

3. A method of reproducing the information from one of the first and second recording layers as defined in the multi-layered optical disc of claim 1.

4. An information reproducing method using the multi-layered optical disc of claim 1, the method comprising:
irradiating a laser with the prescribed wavelength on the burst cutting area provided with the groove (ST20); and
reproducing the specific information from the burst cutting area (ST22, ST24) only on the second recording layer (L1).

## Patentansprüche

1. Mehrschichtige optische Platte (100) mit einer Burst-Cutting-Area und mit einer ersten Aufzeichnungsschicht (L0) und einer zweiten Aufzeichnungsschicht (L1), die mit einem größeren Abstand von einer Lichtanfallsseite angeordnet ist, als die erste Aufzeichnungsschicht (L0), wobei die erste Aufzeichnungsschicht (L0) und die zweite Aufzeichnungsschicht (L1) in der Lage sind, Daten aufzuzeichnen und wiederzugeben mittels Licht mit einer vorgegebenen Wellenlänge, wobei die optische Platte umfasst:
ein Substrat (102),
eine zweite Reflektionsschicht (L1), die auf dem Substrat (102) vorgesehen ist;
eine zweite Aufzeichnungsschicht (L1), die auf der zweiten Reflektionsschicht (L1) vorgesehen ist;
eine Zwischenschicht (103), die auf der zweiten Aufzeichnungsschicht (L1) vorgesehen ist, und
eine erste Reflektionsschicht (L1), die auf der Zwischenschicht (103) vorgesehen ist,
eine erste Aufzeichnungsschicht (L0), die auf der ersten Reflektionsschicht (L1) vorgesehen ist, und wobei
ein erstes Farbmaterial für die erste Aufzeichnungsschicht (L0) verwendet wird,
und ein zweites Farbmaterial für die zweite Aufzeichnungsschicht (L1) verwendet wird,
wobei das zweite Farbmaterial sich vom ersten Farbmaterial unterscheidet, wobei
eine Rille (104) in der zweiten Aufzeichnungsschicht (L1) vorgesehen ist, so dass bestimmte Information nur in der zweiten Aufzeichnungsschicht (L1) aufgezeichnet werden kann, wobei die Burst-Cutting-Area (BCA) bestimmte Information aufgezeichnet hat.

2. Informationsaufzeichnungsverfahren mit einer mehrschichtigen optischen Platte nach Anspruch 1, wobei das Verfahren umfasst:
Bestrahlen eines Lasers mit einer gegebenen Wellenlänge auf eine von einer ersten und einer zweiten Aufzeichnungsschicht (L0, L1); und
Aufnehmen von Information auf der einen Aufzeichnungsschicht.

3. Verfahren zum Wiedergeben von Information von einer ersten und einer zweiten optischen Aufzeichnungsschicht, wie sie in den optischen Platten vom Anspruch 1 festgelegt sind.

4. Informationswiedergabeverfahren mit der mehrschichtigen optischen Platte aus Anspruch 1, wobei das Verfahren umfasst:
Bestrahlen eines Laser mit einer vorgegebenen Wellenlänge auf die Burst-Cutting-Area, in der die Rille (ST20) vorgesehen ist; und
Wiedergeben der spezifischen Information von der Burst-Cutting-Area (ST22, ST24) nur auf der zweiten Aufzeichnungsschicht (L1).

## Revendications

1. Disque optique à couches multiples (100) comportant une zone de coupure de salve comprenant une première couche d'enregistrement (L0) et une deuxième couche d'enregistrement (L1) disposée à une distance plus grande par rapport à un côté d'incidence de lumière que la première couche d'enregistrement (L0), la première couche d'enregistrement (L0) et la deuxième couche d'enregistrement (L1) étant capables d'enregistrer ou de reproduire des données avec une lumière d'une longueur d'onde prescrite, dans lequel le disque optique comprend :
un substrat (102),
une deuxième couche de réflexion (L1) prévue sur le substrat (102),
la deuxième couche d'enregistrement (L1) étant prévue sur la deuxième couche de réflexion (L1),
une couche intermédiaire (103) prévue sur la deuxième couche d'enregistrement (L1), et
une première couche de réflexion (L1) prévue sur la couche intermédiaire (103),
la première couche d'enregistrement (L0) étant prévue sur la première couche de réflexion (L1), et dans lequel
un premier matériau colorant est utilisé pour la première couche d'enregistrement (L0),
et un deuxième matériau colorant est utilisé pour la deuxième couche d'enregistrement (L1), le deuxième matériau colorant diffère du premier matériau colorant ;
dans lequel, dans la zone de coupure de salve (BCA) comportant des informations spécifiques (BCA) enregistrées, une rainure (104) est prévue au niveau de la deuxième couche d'enregistrement (L1), de sorte que les informations spécifiques ne peuvent être enregistrées que sur la deuxième couche d'enregistrement (L1).

2. Procédé d'enregistrement d'informations utilisant le disque optique à couches multiples selon la revendication 1, le procédé consistant à :
rayonner un laser avec une longueur d'onde donnée sur l'une des première et deuxième couches d'enregistrement (L0, L1) ; et
enregistrer des informations sur ladite couche d'enregistrement.

3. Procédé de reproduction des informations à partir de l'une des première et deuxième couches d'enregistrement telles que définies sur le disque optique à couches multiples selon la revendication 1.

4. Procédé de reproduction d'informations utilisant le disque optique à couches multiples selon la revendication 1, le procédé consistant à :
rayonner un laser avec la longueur d'onde prescrite sur la zone de coupure de salve pourvue de la rainure (ST20) ; et
reproduire les informations spécifiques à partir de la zone de coupure de salve (ST22, ST24) uniquement sur la deuxième couche d'enregistrement (L1).
